Europäisches Patentamt

European Patent Office

Office européen des brevets

Numéro de publication: **0 275 797**
A1

# DEMANDE DE BREVET EUROPEEN

(21) Numéro de dépôt: 87403013.3

(51) Int. Cl.⁴ **B62K 21/02** , B62K 19/22

(22) Date de dépôt: 31.12.87

(30) Priorité: 06.01.87 FR 8700955

(43) Date de publication de la demande:
27.07.88 Bulletin 88/30

(84) Etats contractants désignés:
BE CH DE ES GB IT LI LU NL

(71) Demandeur: **M.B.K. Industrie Société Nouvelle Motobecane**
**Zone Industrielle de Rouvroy**
**F-02100 Saint Quentin(FR)**

(72) Inventeur: **Rakover, Jean-Jacques**
**3, rue A. Mathias Morcourt**
**F-02100 Saint-Quentin(FR)**

(74) Mandataire: **Maureau, Bernard et al**
**Cabinet GERMAIN & MAUREAU Conseils en Propriété Industrielle 64, rue d'Amsterdam**
**F-75009 Paris(FR)**

(54) **Fourche de cycle.**

㊿ Dans cette fourche de cycle, qui est formée d'un tube pivot et de deux fourreaux, les fourreaux sont profilés à une de leur extrémité (23) de façon à délimiter ensemble une surface complémentaire de la surface intérieure du tube pivot (24) et à pouvoir être enfilés dans le tube pivot (24) et à être fixés directement sur celui-ci.

De préférence, le tube (24) a une section intérieure cylindrique et chaque fourreau (22) présente à son extrémité (23) un rétreint (25) de façon à délimiter avec le tube pivot une chambre annulaire (26) apte à recevoir la colle.

FIG.5

EP 0 275 797 A1

La présente invention a pour objet une fourche de cycle destinée à être utilisée aussi bien sur des cycles à moteur (cyclomoteur, vélomoteur) que sur des cycles non motorisés (bicyclettes...).

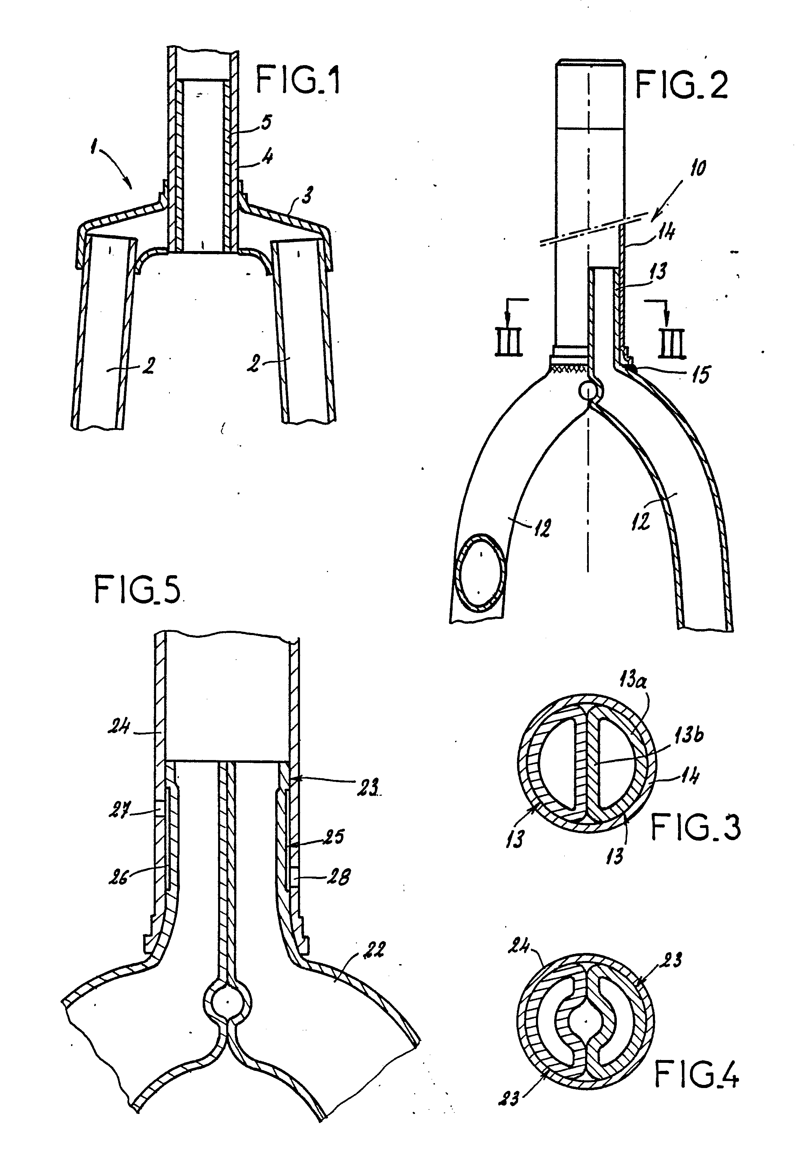

Ainsi que le montre la figure 1, une fourche 1 de cycle est traditionnellement formée de quatre ou cinq pièces, à savoir deux fourreaux 2 qui sont emmanchés chacun dans une tête de fourche 3, celle-ci étant elle-même fixée sur un tube pivot de direction 4, qui est lui-meme destiné à être monté à l'intérieur du tube de direction du cadre (non représenté sur le dessin).

Ces différentes pièces sont assemblées les unes aux autres par soudage ou brasage et il est, en outre, également prévu un tube de renfort 5 emmanché à l'intérieur du tube pivot 4 et également fixé sur celui-ci par soudage ou brasage.

Ces fourches traditionnelles présentent l'inconvénient d'être relativement compliquées et difficiles à assembler, du fait du grand nombre de pièces les constituant, et d'être, en outre, d'un poids relativement élevé.

Le but de la présente invention est de remédier à ces inconvénients et de fournir une fourche nécessitant un nombre plus réduit de pièces et qui soit plus facile à assembler.

Dans cette fourche formée par un tube pivot et par deux fourreaux, les fourreaux sont profilés à une de leurs extrémités , de façon à délimiter ensemble une surface complémentaire de la surface intérieure du tube pivot et ils sont aptes à être enfilés dans le tube pivot et à être fixés directement sur celui-ci.

La fourche ne comprend ainsi que trois pièces, au lieu de quatre ou cinq pour les fourches traditionnelles, et est donc beaucoup plus facile à assembler et beaucoup plus légère que celles-ci.

Selon une forme de réalisation préférée, le tube pivot a une section intérieure cylindrique et les deux fourreaux délimitent ensemble une surface extérieure cylindrique dont le diamètre correspond à celui du tube pivot.

Les fourreaux et le tube pivot peuvent être reliés par soudage et brasage, mais également par collage. Dans ce dernier cas, et selon une caractéristique avantageuse de l'invention, des moyens seront prévus pour définir, entre le tube pivot et les fourreaux, une chambre annulaire apte à recevoir la colle.

De toute façon, l'invention sera mieux comprise et d'autres caractéristiques ce celle-ci seront mises en évidence à l'aide de la description qui suit en référence au dessin schématique annexé illustrant à titre d'exemples non limitatifs de plusieurs formes de réalisation de celle-ci :

Figure 2 est une vue en coupe partielle d'une fourche selon un premier exemple de réalisation.

Figure 3 est, à échelle agrandie, une vue en coupe selon III-III de figure 2;

Figure 4 est une vue similaire à figure 3 d'une autre forme de réalisation.

Figure 5 est une vue en coupe longitudinale d'une fourche selon encore un autre exemple de réalisation.

Ainsi que le montre notamment la figure 2, la fourche 10 selon l'invention est formée uniquement de deux fourreaux 12 et d'un tube pivot de direction 14, soit trois pièces au lieu de quatre à cinq dans les fourches traditionnelles.

Chacun des fourreaux 12, qui a une section elliptique comme montré à la figure 2, est emmanché par l'une 13 de ses extrémités à l'intérieur du tube pivot 14.

Ainsi que le montre la figure 3, l'extrémité 13 de chacun des fourreaux est profilée en forme de demi-cylindre présentant une partie circulàire 13b et une partie plane 13a, de façon que les deux extrémités 13 accollées ensemble par leur partie plane 13a délimitent par leur partie circulaire 13b une surface cylindrique dont le diamètre correspond au diamètre intérieur du tube pivot 14.

L'assemblage de la fourche s'effectue donc en accolant les deux fourreaux 12 et en les emmanchant dans le tube pivot 14, la liaison entre les différents tubes 12, 14 étant effectuée au moyen d'une soudure ou brasure 15 (cf. figure 2).

La forme de réalisation montrée sur les figures 2 et 3 est surtout destinée à des tubes 12, 13 métalliques et notamment en acier, pouvant être assemblés entre eux par soudage ou brasage.

Dans le cas des figures 4 et 5, dans lesquelles les mêmes éléments que dans les figures 2 et 3, seront désignés par les mêmes références augmentées de dix, les deux fourreaux 22 sont en fibre de carbone et sont assemblés par collage au tubes pivot 24, ce dernier étant en acier.

Dans ce cas, chacun des fourreaux 22 est réalisé par moulage et présente en section transversale sur toute sa longueur le profil montré à la figure 4, à savoir sensiblement la forme d'un haricot.

Chacun des fourreaux 22 présente, en outre, à son extrémité 23, destinée à être enfilée dans le tube pivot 24, un rétreint 25.

Ainsi les deux fourreaux 22 enfilés dans le tube pivot 24 délimitent avec celui-ci une chambre annulaire 26, dans laquelle pourra être introduite la colle destinée à l'assemblage de ces tubes.

Dans ce cas, ainsi que le montre la figure 5, le tube pivot 24 présente, au niveau de sa zone d'assemblage avec les fourreaux 22, deux orifices radiaux 27, 28 débouchant tous les deux dans la chambre annulaire 26 définie ci-avant.

L'orifice 7 sert à introduire la colle dans la chambre annulaire 26, l'excédent de colle étant évacué par l'orifice 28.

Comme il va de soi, la présente invention ne se limite pas aux seules formes d'exécution montrées ci-avant à titre d'exemples non limitatifs, elle en embrasse, au contraire, toutes les variantes de réalisation mettant en oeuvre des moyens similaires ou équivalents.

Notamment, ce principe de liaison n'est pas limité à la fourche avant d'un vélo et peut être utilisé lors de la liaison des deux haubans ou des deux bases arrières d'un cadre de cycle.

## Revendications

1. - Fourche de cycle, formée par un tube pivot (14,24) et par deux fourreaux (12,22), caractérisée en ce que les fourreaux sont profilés à une de leurs extrémités (13,23) de façon à délimiter ensemble une surface complémentaire de la surface intérieure du tube pivot (14,24) et en ce qu'ils sont aptes à être enfilés dans le tube pivot (14,24) et à être fixés directement sur celui-ci.

2. - Fourche de cycle selon la revendication 1, caractérisée en ce que le tube pivot (14,24) a une section intérieure cylindrique et en ce que les deux fourreaux(12,22) délimitent ensemble une surface extérieure cylindrique dont le diamètre correspond à celui du tube pivot (14,24).

3. - Fourche de cycle selon l'une des revendications 1 ou 2, caractérisée en ce que les fourreaux (12) et le tube pivot (14) sont en métal et en ce qu'ils sont assemblés ensemble par soudage ou brasage (15).

4. - Fourche de cycle selon la revendication 3, caractérisée en ce que chaque fourreau (12) est profilé à son extrémité (13) en forme de demi-cylindre.

5. - Fourche selon l'une des revendications 1 ou 2, caractérisée en ce que les fourreaux (22) sont en fibre de carbone ou en matériau non métallique similaire et en ce qu'ils sont assemblés au tube pivot (24) par collage.

6. - Fourche selon la revendication 5, caractérisée en ce que chaque fourreau (22) présente à son extrémité (23) un rétreint (25) de façon à délimiter avec le tube pivot une chambre annulaire (26) apte à recevoir la colle.

7. - Fourche selon la revendication 6, caractérisée en ce que le tube pivot (24) présente, au niveau de sa zone d'assemblage avec les fourreaux (22), deux orifices radiaux (27,28) débouchant dans la chambre annulaire (26) l'un de ces orifices (27) étant destiné à l'introduction de la colle de la chambre annulaire (26) et l'autres (28) de ces orifices étant destiné à l'évacuation de l'excédent de colle.

8. - Fourche selon les revendications 5 à 7, caractérisée en ce que chacun des tubes fourreaux (22) présente en section transversale sensiblement la forme d'un haricot.

0 275 797

FIG.1

FIG.2

FIG.5

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X | FR-A-2 589 121 (TECHNIQUE DU VERRE TISSE) <br> * Figures 1-4; page 6, ligne 4 - page 11, ligne 2 * <br> --- | 1,2,4,5 | B 62 K 21/02 <br> B 62 K 19/22 |
| A | FR-A-2 523 541 (ATELIERS DE LA MOTOBECANE) <br> * Figures 1-7; page 3, ligne 17 - page 8, ligne 16 * <br> --- | 6 | |
| A | FR-A-2 511 334 (MECACYCLE) <br> * Figures 1-11; page 2, ligne 28 - page 4, ligne 22 * <br> --- | 1 | |
| A | FR-A-2 230 539 (JULIUS SPRICK) <br> * Figures 1-4; page 3, ligne 21 - page 6, ligne 20 * <br> ----- | 1 | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 13-04-1988 | VANNESTE M.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................
& : membre de la même famille, document correspondant

EPO FORM 1503 03.82 (P0402)